# EUROPÄISCHE PATENTSCHRIFT

(11) **EP 2 118 712 B1**
(45) Veröffentlichungstag und Bekanntmachung des Hinweises auf die Patenterteilung: **15.12.2010**
(21) Anmeldenummer: 07856957.1
(22) Anmeldetag: 20.12.2007
(51) Int. Cl.: G05B 23/02, F03D 7/04

(54) **SCADA-EINHEIT**
SCADA UNIT
UNITE SCADA

(30) Priorität: 04.01.2007 DE 102007001121; 05.06.2007 DE 102007026176
(43) Veröffentlichungstag der Anmeldung: 18.11.2009
(73) Patentinhaber: DeWind Co., Irvine, CA 92614 (US)
(72) Erfinder: SZEMKUS, Frank, 23919 Berkenthin (DE)
(74) Vertreter: Knoop, Philipp
(86) Internationale Anmeldenummer: PCT/EP2007/011234
(87) Internationale Veröffentlichungsnummer: WO 2008/080564

(56) Entgegenhaltungen:
- DE-A1- 10 030 781
- US-A1- 2002 029 097
- US-A1- 2004 181 549
- US-A1- 2004 230 377
- US-A1- 2005 090 937

## Beschreibung

Die vorliegende Erfindung betrifft eine dezentrale Steuer- und Datenaufzeichnungseinheit (SCADA-Einheit) zum Einbau in dezentrale Energieressourcen (DER), insbesondere Windturbineneinheit, und/oder zur dezentralen Verwendung am Ort einer dezentralen Energieressource (DER), insbesondere Windturbineneinheit, umfassend eine Steuereinheit, insbesondere Turbinensteuereinheit, zur Steuerung der dezentralen Energieressourcen (DER), eine Datenbank zum Speichern von Betriebsdaten und/oder Betriebsparametern sowie eine Netzwerk-Kommunikationsschnittstelle zum Austausch von Daten und/oder Steuerbefehlen mit externen Einheiten über ein externes Netzwerk.,

Derartige SCADA-Einheiten sind im Zusammenhang mit unterschiedlichen dezentralen Energieressourcen (DER) gebräuchlich. DER, bei denen die gattungsgemäßen SCADA-Einheiten zum Einsatz kommen, sind zum Beispiel Solaranlagen, Biokraftwerken oder Windenergieantagen.

Dezentrale Energieressourcen, besonders Windturbinenanlagen, werden zu immer bedeutsameren und wirtschaftlicheren Energiequellen innerhalb der Energieversorguhgssysteme. Aus diesem Grunde werden dezentrale Energieressourcen weltweit errichtet. beim Betrieb von dezentralen Energieressourcen (DER) ist grundsätzlich zu unterscheiden zwischen den Kunden der (DER) sowie den Anteilsinhabern von (DER). Zu den Anteilseignern in diesem Sinne zählt man Ingenieurbüros, Herstellerfirmen sowie Wartungsfirmen.

Zwischen den genannten Parteien ist eine Kommunikation im Sinne eines Datenaustauschs von technischen Daten betreffend den Betrieb der DER gewünscht. Zu diesem Zwecke dienen die gattungsgemäßen Steuer- und Datenaufzeichnungseinheiten. Diese sind im angelsächsischen unter dem Akronym SCADA-Einheiten bekannt, wobei SCADA für *supervisory control and data aquisition* steht. Für die genannten Parteien ist es jeweils von Interesse, Betriebsdaten von einer Windturbine abzurufen, um diese in spezifischer Weise weiterzubearbeiten. Beispielsweise ist es für Elektrizitätsanbieter von Bedeutung, die tatsächlich von einer Windenergieanlage gelieferte Strommenge abzurufen, etwa zum Zwecke der Abrechnung. Für Ingenieurbüros sind häufig wartungsrelevante Daten wie etwa die Betriebsdauer, der Betriebsverlauf oder aktuelle Betriebsparameter von Interesse. Ebenso ist es erwünscht, durch Übermitteln von Steuerbefehlen auf die Steuerung der DER von extern Einfluss zu nehmen. Aufgrund des Umstandes, dass die genannten Parteien in der Regel nicht vor Ort bei der dezentralen Energieressource ansässig sind, ist eine Möglichkeit zur Ferndatenabfrage bzw. zum bidirektionalen Datenaustausch erforderlich. Um diesen Ferndatenaustausch sicherzustellen, sind gattungsgemäße SCADA-Einheiten mit einer Netzwerk-Kommunikationsschnittstelle versehen.

Eine gattungsgemäße SCADA-Einheit ist beispielsweise aus der US 2005 090937 B2 im Zusammenhang mit einer Windenergieanlage bekannt. In der Patentschrift ist offenbart, dass in einem Windpark jede einzelne Windturbine mit einer lokalen Turbinensteuerung, einer Datenbank sowie einer Turbinensteuerungs- und Datenaufzeichnungseinheit - genannt TCS - ausgestattet ist. Jede Windturbine ist über das TCS mit einem Winkparknetzvüerk verburiden, wobei das Windparknetzwerk die Verbindung der einzelnen Windturbinen mit einer so genannten SCADA-Master-Einheit herstellt. Das Windparknetzwerk ist ein lokales Netzwerk. Eine Verbindung mit einem externen Netzwerk ist ausschließlich über eine Netzwerkschnittstelle auf Seiten des SCADA-Masters möglich. Somit ist eine Kommunikation zwischen der bekannten windturbinenbasierten SCADA-Einheit und den oben genannten Gruppen ausschließlich über den SCADA-Master möglich. Das Datenkommunikationsmodell, welches im Zusammenhang mit der bekannten SCADA-Einheit implementiert ist, entspricht somit einer Master-Slave-Konfiguration. Dies hat den Nachteil, dass bei Ausfall des SCADA-Masters alle damit verbundenen Slaves, also alle damit verbundenen windturbinenbasierten SCADA-Einheiten, nicht mehr zu erreichen sind. Ein weiterer Nachteil ist, dass SCADA-Master in der Regel kostenintensive Systeme darstellen, die einen erheblichen Anteil an den Anschaffungskosten für Windenergieanlagen haben. Schließlich ist es nachteilig, dass im Falle von heterogenen Windparks, bei denen unterschiedliche Windturbineneinheiten parallel betrieben werden, mehrere unterschiedliche SCADA-Datenbanken benötigt werden, welche von den Betreibern auszuwerten sind. Die Integration in Datenbanken von Betreibern und Wartungsfirmen wird hierdurch erschwert. Die Windenergieanlageninteressengruppen sind ferner bei dieser bekannten Ausführungsform SCADA-Einheiten an die Datenbanken des SCADA-Anbieters gebunden. Eine Anpassung an Veränderungen der Datenstruktur auf Seiten der Interessengruppen an Windenergieanlagen auf flexible Art ist daher nachteilig kaum möglich.

Bei einer anderen bekannten dezentralen SCADA-Einheit der eingangs genannten Art sind die SCADA-Einheiten als Speicher programmierbare Steuerungen (SPS) in Form einer programmierbaren Logik (PLC) ausgestattet. Über diese PLC-ist eine direkte Kommunikation zwischen Mensch-Maschine-Schnittstellen auf Seiten der unterschiedlichen Interessenhalter und der DER, insbesondere Windenergienanlage, möglich. Insofern ist eine PLC-basierte SCADA-Einheit der oben beschriebenen, auf einem Master-Slave-Modell basierenden Architektur überlegen, denn ein zentraler Master ist hier nicht zwischengeschaltet. Nachteilig an einer PLC-basierten direkten Kommunikation ist jedoch, dass die PLC nur über herstellerspezifische Protokolle und passende, ebenfalls herstellerspezifische Geräte möglich ist. Durch den Einsatz einer PLC basierten Variante einer gattungsgemäßen SCADA-Einheit entsteht somit eine sehr enge herstellerspezifische Kopplung zwischen den DER-Interessenten und der SCADA-Einheit. Daraus ergibt sich der Nachteil, daß eine flexible Anpassung an Kundenwünsche, Systemänderungen auf Seiten der DER-Interessenten oder ähnliches nicht möglich ist. Den Anforderungen der Interessenhalter ist auf diese Weise mit Nachteil nur sehr schwer und zeitverzögert nachzukommen.

Im allgemeinen ist zur Zeit eine wachsende Heterogenität von DER, besonders im Falle von Windparks, bezüglich der vertretenen Anlagenhersteller zu beobachten. Ferner unterscheiden sich die Anforderungen an die Funktionalität einer gattungsgemäßen SCADA-Einheit je nach DER-Interessenhalter beträchtlich. Die Geschäftsmodelle der Interessenhalter verändern sich innerhalb kurzer Zeitintervalle, so dass die Forderung besteht, die SCADA-Einheiten an derartige Änderungen schnell und flexibel anpassen zu können. Gleichzeitig steigen die Anforderungen der Interessenhalter an Datenverarbeitung und Datenverwaltung von Daten der DER. Außerdem besteht in zunehmendem Maße das Bedürfnis, Daten der DER in die Geschäftsabläufe der Interessenhalter zu integrieren.

Somit liegt der vorliegenden Erfindung die Aufgabe zugrunde, eine gattungsgemäße SCADA-Einheit so zu verbessern, dass eine bessere Einbindung in die Geschäftsprozesse der Interessenhalter möglich ist, mit flexiblen Anpassungsmöglichkeiten an unterschiedliche Systeme, veränderliche Kundenwünsche sowie veränderliche Hardware. Außerdem soll die Fehleranfälligkeit beim Datenaustausch mit einer gattungsgemäßen SCADA-Einheit verringert und die Investitionskosten von DER-Anlagen reduziert werden.

Erfindungsgemäß wird diese Aufgabe bei einer gattungsgemäßen SCADA-Einheit dadurch gelöst, dass sie einen SCADA-Betriebssystemkern (kernel) zum Steuern und/oder Verwalten der Steuereinheit , der Datenbank und der Kommunikationseinheit umfasst. Hierdurch entfällt die Notwendigkeit eines separaten SCADA-Masters. Dies macht mit Vorteil weder ein SCADA-Protokoll noch eine SCADA-Datenbank erforderlich. Vielmehr ist mittels des dezentral in der SCADA-Einheit vorgesehenen Betriebssystemkerns eine direkte Kommunikation zwischen den Interessenhaltern der DER und der SCADA-Einheit möglich. Hierbei sind die Interessenhalter der DER nicht an die Datenbanken eines SCADA-Anbieters gebunden. Mit Vorteil ist eine direkte Unterstützung der Dateninfrastruktur der Interessenhalter beispielsweise durch standardisierte Datendienste möglich. Der auf Seiten der DER vorgesehene Betriebssystemkern ermöglicht es, SCADA-Komponenten flexibel zusammenzustellen und zu verschalten, um kurzzeitigen Änderungen von Geschäftsmodellen der Interessenhalter von DER zu entsprechen. Mit der erfindungsgemäßen SCADA-Einheit werden die Interessenhalter in die Lage versetzt, benötigte Daten über die DER direkt von der SCADA-Einheit abzufragen, um Modelle zu erstellen, um Wartungspläne zu erstellen und vieles andere mehr. Die SCADA-Einheit gemäß der Erfindung ist geeignet im Zusammenhang mit DER wie zum Beispiel Solarkraftwerke, Biokraftwerken oder Windenergieanlagen. Auch sogenannte virtuelle Kraftwerke, welche eine Zusammenschaltung mehrerer DER sind, lassen sich mit der erfindungsgemäßen DER betreiben. Beispielsweise kann ein virtuelles Kraftwerk eine virtuelle Zusammenschaltung von Windenergieanlagen, Solarenergieanlagen sowie Biokraftwerken sein.

Die erfindungsgemäße SCADA-Einheit wird noch verbessert, wenn der Betriebssystemkern einen über die Netzwerk-Kommunikationsstelle öffentlich zugänglichen Datenbereich aufweist. Dieser öffentliche Datenbereich kann von den Interessenhaltern über ein externes Netzwerk angesprochen werden, um verschiedenste Daten über die DER abzurufen. Falls die DER beispielsweise eine Windenergieanlage ist, lassen sich etwa Daten über die Windturbine abrufen.

Um zu vermeiden, dass aufgrund der bei der erfindungsgemäßen SCADA-Einheit vorhandenen Möglichkeit einer direkten Datenkommunikation ein missbräuchlicher Zugriff auf bestimmte Daten und/oder Steuereinrichtungen erfolgt, weist der Betriebssystemkern einen geschützten Datenbereich, welcher nicht über die Netzwerk-Kommunikationsschnittstelle öffentlich zugänglich ist, auf.

In vorteilhafter Ausgestaltung der Erfindung ist die Datenbank in dem geschützten Datenbereich implementiert. Wenn in der Datenbank beispielsweise Parameter für den Betrieb und die Steuerung der DER lokal abgelegt sind, ist durch diese Maßnahme mit Vorteil sichergestellt, dass ein unberechtigter Zugriff über ein externes Netzwerk auszuschließen ist.

Um einen autonomen Betrieb der erfindungsgemäßen SCADA-Einheit sicherzustellen, ist in vorteilhafter Ausgestaltung der Erfindung vorgesehen, daß die Datenbank zum langfristigen Speichern, insbesondere zur Auswertung von Langzeittrenddaten, ausgebildet ist. Im Unterschied dazu sind bei einigen bekannten SCADA-Einheiten lediglich Datenbanken vorhanden, welche zum kurzfristigen Zwischenspeichern kleinerer Datenpakete geeignet sind. Derartige Datenbanken können abweichend von der Erfindung stets nur in Verbindung mit einer zusätzlichen externen Datenbank betrieben werden, sodaß im Unterschied zu der Erfindung ein autonomer Betrieb nicht möglich ist.

In weiterer vorteilhafter Ausgestaltung der Erfindung ist vorgesehen, dass in dem geschützten Datenbereich eine lokale Kommunikationseinheit zur Kommunikation zwischen dem Betriebssystemkern und der DER implementiert ist. Die DER kann beispielsweise diverse Messwandler aufweisen, welche Aufschluss über deren Betrieb geben. Die Aufzeichnung dieser Daten innerhalb des geschützten Datenbereichs ermöglicht dann eine gezielte Freigabe von Daten oder auch eine Zurückhaltung einzelner Daten. Ebenso dient die lokale Kommunikationseinheit zur Übergabe von Steuerparametern von dem Betriebssystemkern an entsprechende Stellorgane der DER. Auch in diesem Fall ist es von Vorteil, diese Funktionalität vor einem unberechtigten Zugriff über externe Netze zu schützen.

Gemäß einer anderen günstigen Ausgestaltung der Erfindung ist der öffentlich zugängliche Datenbereich zur Ausführung eines oder mehrerer softwarebasierter Dienste ausgebildet. Die erfindungsgemäße SCADA-Einheit lässt sich auf diese Weise mit Vorteil gemäß einer sog. "Service oriented arcitecture" betreiben, wobei die softwarebasierten Dienste von extern nutzbar bzw. abrufbar sind.

Besonders nützlich ist es für die verschiedenen Interessenhalter der Windenergieanlagen, wenn der softwarebasierte Dienst die Übertragung von Echtzeitdaten der DER beinhaltet. Mit der erfindungsgemäßen SCADA-Einheit ist es auf diese Weise möglich, unmittelbar, ohne dass ein SCADA-Master zwischengeschaltet ist, in Echtzeit auf Daten der DER zuzugreifen.
Alternativ oder zusätzlich kann gemäß der Erfindung der softwarebasierte Dienst die Übertragung von die DER betreffenden Datenauswertungen, insbesondere Produktionsdaten, Leistungsdaten, Zeitreihen, Fehlerverfolgungen beinhalten.

Damit die von dem Betriebssystemkern angebotenen softwarebasierten Dienste von externen Nutzern gefunden werden können und damit deren Existenz verwaltet werden kann, ist in weiterer vorteilhafter Ausgestaltung der Erfindung vorgesehen, dass der Betriebssystemkern ein Verzeichnis und/oder einen Mechanismus (*service repository*) zum Auffinden von softwarebasierten Diensten aufweist. So ist gewährleistet, dass die Dienste auch von den Anwendern gefunden werden können. In einer dynamischen dienstorientierten Architektur, in der sich Dienste automatisch registrieren oder abmelden können, ist ein derartiges Verzeichnis sehr hilfreich. Gemäß einer anderen vorteilhaften Ausgestaltung der erfindungsgemäßen,SCADA-Einheit weist diese eine Mensch-Maschine-Schnittstelle (HMI), insbesondere visuelle, auf. Beispielsweise kann eine Anzeige wichtiger Betriebsdaten vorhanden sein, welche es dem Wartungspersonal am Ort der Windturbine ermöglicht, Betriebsdaten direkt vor Ort abzulesen, ohne Vermittlung eines SCADA-Masters oder ähnlichem. Auch kann gemäß der Erfindung die Schnittstelle eine Tastatur oder ähnliches aufweisen, um es dem Wartungspersonal vor Ort bei der DER zu ermöglichen, deren Betriebsparameter zu verändern oder um spezielle Daten, welche angezeigt werden sollen, anzufordern.

Um die erfindungsgemäße SCADA-Einheit für die Datenkommunikation über das Internet auszugestalten, ist in spezieller Ausgestaltung der Erfindung vorgesehen, dass die Netzwerk-Kommunikationsschnittstelle zur Kommunikation mit dem externen Netzwerk mittels des TCP/IP Kommunikationsprotokolls ausgebildet ist.

In anderer besonders günstiger Ausgestaltung der Erfindung sind die softwarebasierten Dienste über das SOAP-Kommunikationsprotokoll abrufbar. Das SOAP-Protokoll ist zu diesem Zweck weit verbreitet, so dass eine möglichst universelle Anwendbarkeit der erfindungsgemäßen SCADA-Einheit sichergestellt ist.

Ebenfalls im Interesse einer Standardisierung der Kommunikation mit der erfindungsgemäßen SCADA-Einheit ist in weiterer vorteilhafter Ausgestaltung das Verzeichnis und/oder der Mechanismus (*service repository*) zur Kommunikation über mindestens eines der Protokolle WSDL, UDDI, WS-Instruction ausgebildet. Hierbei steht WSDL für *Web Service Description Language,* UDDI für *Universal Description, Discovery and Integration,* WS steht für *Webservice Inspection.*

Das Akronym SOAP steht für Simple Object Access Protocol.

Die Erfindung wird in einer bevorzugten Ausführungsform unter Bezugnahme auf eine Zeichnung beschrieben, wobei weitere vorteilhafte Einzelheiten den Figuren der Zeichnung zu entnehmen sind.

Funktionsmäßig gleiche Teile sind mit denselben Bezugszeichen versehen.

Die Figuren der Zeichnungen zeigen im Einzelnen:
- Figur 1:: schematische Darstellung der Kommunikationsarchitektur am Beispiel einer Windenergieturbine gemäß zwei Varianten des Standes der Technik,
- Figur 2:: schematische Darstellung der Kommunikationsarchitektur unter Einsatz einer erfindungsgemäßen SCADA-Einheit,
- Figur 3:: schematische Darstellung der Innenarchitektur des Betriebssystemkerns der erfindungsgemäßen SCADA-Einheit,
- Figur 4:: Fließdiagramm zur Veranschaulichung des Kommunikationsablaufs mit der erfindungsgemäßen SCADA- Einheit zum Abruf softwarebasierter Dienste von extern,
- Figur 5:: Fließdiagramm zur Veranschaulichung der Kommunikation mit der erfindungsgemäßen SCADA-Einheit zum Abruf analytischer Daten.
- Figur 6:: schematische Darstellung einer anderen speziellen Kommunikationsarchitektur unter Einsatz der erfindungsgemäßen SCADA-Einheit.

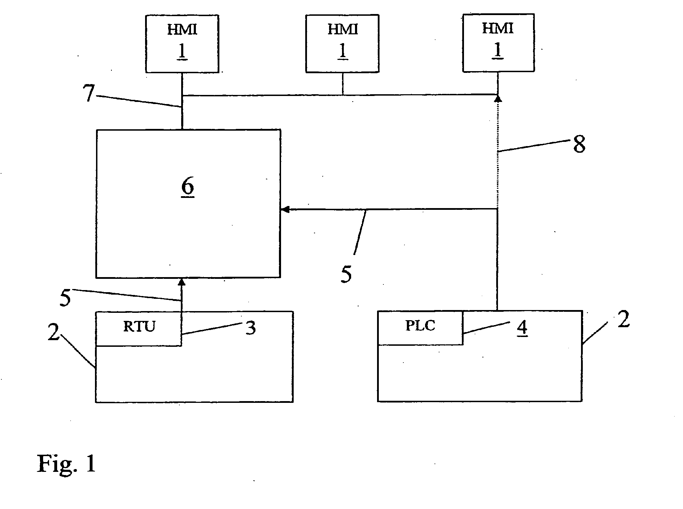

In der Figur 1 sind zum besseren Verständnis der Vorteile der Erfindung zunächst zur Abgrenzung zwei derzeit übliche Architekturen gemäß dem Stand der Technik der Kommunikation am Beispiel einer Windturbine dargestellt. Zu erkennen sind in Figur1 exemplarisch drei nur schematisch dargestellte Mensch-Maschine-Schnittstellen 1. Außerdem sind im unteren Teil der schematischen Darstellung gemäß Figur 1 zwei Steuer-Datenaufzeichnungseinheiten (auch SCADA-Einheiten 2) dargestellt. Beide SCADA-Einheiten 2 sind jeweils in einer Windturbineneinheit lokal vor Ort eingebaut. Dies ist in der Schemadarstellung nicht zu erkennen. Die im Bild links unten dargestellte SCADA-Einheit 2 ist als Windturbinensteuerung 3 in Form eines SCADA-slave ausgestaltet. Die als SCADA-slave ausgestaltete Windturbinensteuerung 3 der SCADA-Einheit 2 ist-über ein lokales Netzwerk 5 mit einer übergeordneten SCADA Master Station 6 verbunden. Die SCADA Master Station 6 ist extern von der Windturbineneinheit und insbesondere außerhalb der SCADA-Einheit 2 vorgesehen. Die Mensch-Maschinen-Schnittstellen 1 sind über ein externes Netzwerk 7, beispielsweise über das Internet, mit der SCADA-Master Station 6 verbunden. Diese Architektur gemäß dem linken Kommunkationszweig in Figur 1 entspricht dem Prinzip gemäß US Patent 7,013,203 B2. Eine Kommunikation zwischen Mensch-Maschine-Schnittstellen 1 mit der Windturbinensteuerung 3 innerhalb der SCADA-Einheit 2 ist nicht direkt möglich, sondern erfordert stets eine Kommunikation zwischen der Mensch-Maschine-Schnittstelle 1 und der SCADA-Master Station 6. Wenn beispielsweise die SCADA-Master Station 6 ausfällt, ist eine Kommunikation zwischen der Mensch-Maschine-Schnittstelle 1 und der Windturbinensteuerung 3 innerhalb der SCADA-Einheit 2 nicht möglich.

Die in Figur 1 rechts unten dargestellte SCADA-Einheit 2 ist mit einer speicherprogrammierbaren Steuereinheit 4 versehen. Die speicherprogrammierbare Steuereinheit 4 ist über ein lokales Netzwerk 5 mit der SCADA-Master Station 6 verbunden. Auf diesem Kanal ist einerseits eine Kommunikation zwischen den Mensch-Maschine-Schnittstellen 1 und der speicherprogrammierbaren Steuereinheit 4 innerhalb der SCADA-Einheit 2 wie oben beschrieben durch Vermittlung der SCADA-Master Station 6 möglich. Im Falle der SCADA-Einheit 2 mit einer speicherprogrammierbaren Steuereinheit 4 ist jedoch zusätzlich eine direkte Kommunikation zwischen der Mensch-Maschine-Schnittstelle 1 und der SCADA-Einheit 2 über eine direkte Datenverbindung 8 möglich. Die Kommunikation über die direkte Datenverbindung 8 ist nachteilig nur über spezifische, der speicherprogrammierbaren Steuereinheit 4 angepasste Protokolle und Geräte möglich. Die spezifischen Geräte müssen auch auf Seiten der Mensch-Maschine-Schnittstelle 1, welche mit der speicherprogrammierbaren Steuereinheit 4 innerhalb der SCADA-Einheit 2 kommuniziert, vorhanden sein. Eine flexible Anpassung der Kommunikation ist hierdurch kaum möglich.

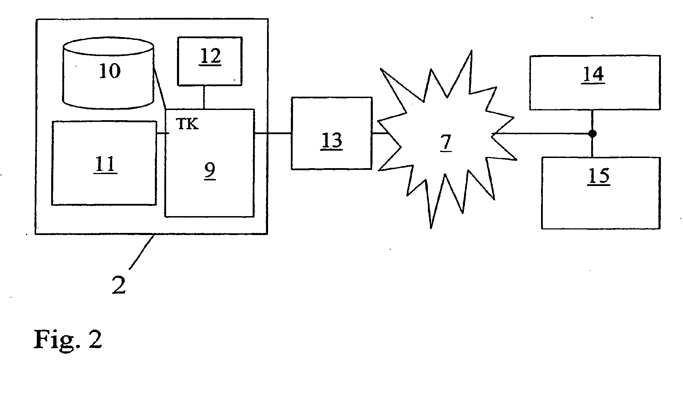

In der Figur 2 ist im Gegensatz dazu schematisch die Architektur einer Kommunikation zwischen externen Geräten und einer erfindungsgemäßen SCADA-Einheit 2 veranschaulicht. Beispielhaft wird die Kommunikation bei einer Windenergieanlage erläutert. Die erfindungsgemäße SCADA-Einheit kann jedoch gleichermaßen bei dezentralen Energieressourcen wie beispielsweise Solarkraftwerke oder Biokraftwerken oder jeder anderen DER eingesetzt werden. Die windturbinenbasierte SCADA-Einheit gemäß einem bevorzugten Ausführungsbeispiel der Erfindung weist einen dezentralen Kernel 9 innerhalb der Turbine (nachfolgend auch Turbinenkernel genannt) als zentrale Funktionseinheit auf. Verbunden mit dem Turbinenkernel 9 innerhalb der erfindungsgemäßen SCADA-Einheit 2 sind eine Datenbank 10, eine Turbinensteuereinheit 11 sowie eine interne Mensch-Maschine-Schnittstelle 12. Die interne Mensch-Maschine-Schnittstelle 12 kann z. B. ein Computerterminal mit Tastatur und Bildschirm sein. Der Turbinenkernel 9 kann entweder lokal in der Windturbineneinheit integrierten sein oder auf einem Mikroprozessor implementiert sein. Alternativ kann der Turbinenkernel 9 auch als Software in Teilen oder zur Gänze innerhalb der Turbinensteuerung 11 enthalten sein.

An die SCADA-Einheit 2 ist gemäß Figur 2 eine Netzwerkschnittstelle 13 angeschlossen. Die Netzwerkschnittstelle 13 verbindet der Turbinenkernel 9 innerhalb der erfindungsgemäßen SCADA-Einheit 2, welche in die Windturbineneinheit integriert ist, über das externe Netzwerk 7 mit externen Geräten. Das externe Netzwerk 7 kann gleichermaßen das Internet, ein Wide-Area-Netzwerk (WAN) oder ein LAN (local area Netzwerk) sein. Über das externe Netzwerk 7 sind mit dem Turbinenkernel 9 das an einem entfernten Ort befindliche Datenendgerät 14 sowie ein Alarmmeldedienst 15 als bevorzugte Beispiele von externen Mensch-Maschine-Schnittstellen 1 angeschlossen.

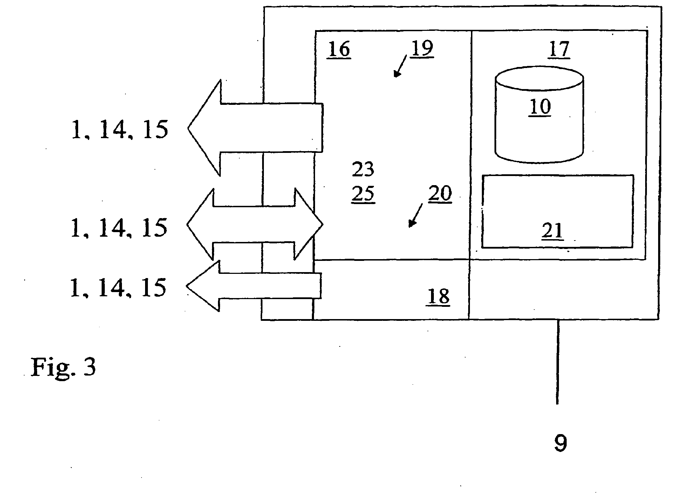

Die Figur 3 veranschaulicht den inneren Aufbau des Turbinenkernels 9, welches sich gemäß der Erfindung innerhalb der in die Windturbineneinheit integrierten SCADA-Einheit 2 befinde. Obwohl das bevorzugte Ausführungsbeispiel anhand einer Windenergieanlage beschrieben ist und daher auf ein Turbinenkernel Bezug genommen wird; bezieht sich die Erfindung gleichermaßen auf SCADA-Einheiten bei Solarkraftwerke, Biokraftwerke und andere dezentrale Energieressourcen. Dabei ist erfindungsgemäß der Kernel unabhängig von der zu steuernden DER Wie die Figur 3 schematisch veranschaulicht, sind auf dem Turbinenkernel 9 ein öffentlich zugänglicher Datenbereich 16, ein geschützter Datenbereich 17 sowie ein *service repository* 18 implementiert. In dem öffentlich zugänglichen Datenbereich 16 sind diverse softwarebasierte Dienste 19, 20 implementiert, und zwar die softwarebasierten Datenauswertedienste 19 sowie ein EchtzeitDatenübertragungsdienst 20. Die Datenauswertedienste umfassen gemäß dieser speziellen Ausführung einen Dienst zur Übertragung für Produktionsdaten, von Leistungskurven, Zeitreihen sowie von Fehlernachverfolgungen.

Innerhalb des geschützten Datenbereichs 17 ist die Datenbank 10 implementiert. Außerdem befinden sich innerhalb des geschützten Datenbereichs 17 eine lokale Kommunikationseinheit 21, welche zur Kommunikation zwischen dem Turbinenkernel 9 und Geräten der Windturbine dient. Schematisch durch Pfeile angedeutet ist in Figur 3 jeweils eine Kommunikationsverbindung zu externen Mensch-Maschine-Schnittstellen 1, Datenendgeräten 14 und/oder Alarmmeldediensten 15.

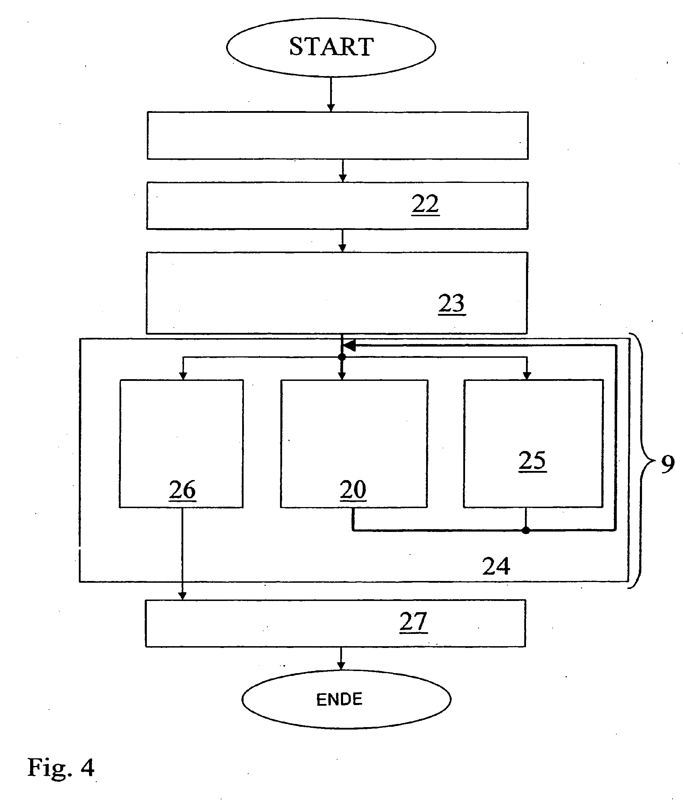

In der Figur 4 ist in Form eines Fließdiagramms der Vorgang des Aufbaus einer Kommunikationsverbindung zum Abrufen eines des im Kernel 9 innerhalb des öffentlich zugänglichen Datenbereichs 16 implementierten Datendienste 19, ,20 veranschaulicht. Wie in Figur 4 veranschaulicht, wird in einem ersten Schritt 21 von einem Interessenhalter der DER über einen öffentlichen Verbindungsdienst 21 eine Sitzung 22 mit dem Kernel 9 aufgebaut. Nach Aufbau der Sitzung 22 wird über den Kernel 9 ein Zugangsberechtigungsdienst 23 aufgerufen, um die Zugangsberechtigung des Interessenhalters zu verifizieren. Sofern die Zugangsberechtigung des Dienstes 23 die Berechtigung bestätigt wurde, besteht eine direkte Datenverbindung zwischen dem Interessenhalter der DER und der in die DER integrierten lokalen SCADA-Einheit 2 vermittels des Kernels 9. Innerhalb des kernels 9 wird sodann ein Kommunikationszyklus 24 initiiert. Innerhalb des Kommunikationszyklus 24 kann der Benutzer Steuerungsdienste 25 der DER sowie den Echtzeitdatenübertragungsdienst 20 nutzen. Ferner steht dem Benutzer innerhalb des Kommunikationszyklus 24, welcher auf dem lokalen Kernel 9 läuft, den Nutzermeldedienst 26 nutzen, um den Kommunikationszyklus 24 zu beenden. In dem in Figur 4 veranschaulichten Betriebsmodus ist der Standarddatenweg der EchtzeitDatenübertragungsdienst 20 innerhalb des lokalen Kernels 9.

Nach Ausführung des Nutzerabmeldedienstes 26 deaktiviert der lokalen Kernel 9 die Nutzerdaten und beendet die Nutzersitzung in einem Abmeldeschritt 27 automatisch. Diese Kommunikation erfolgt über ein externes Netz, wie z. B. das Internet, direkt mit der erfindungsgemäßen SCADA-Einheit 2 innerhalb der DER durch Vermittlung des lokalen Kernels 9. Insbesondere verläuft die Kommunikation nicht über eine der SCADA-Einheit übergeordnete SCADA-Master Station wie im Falle des Standes der Technik.

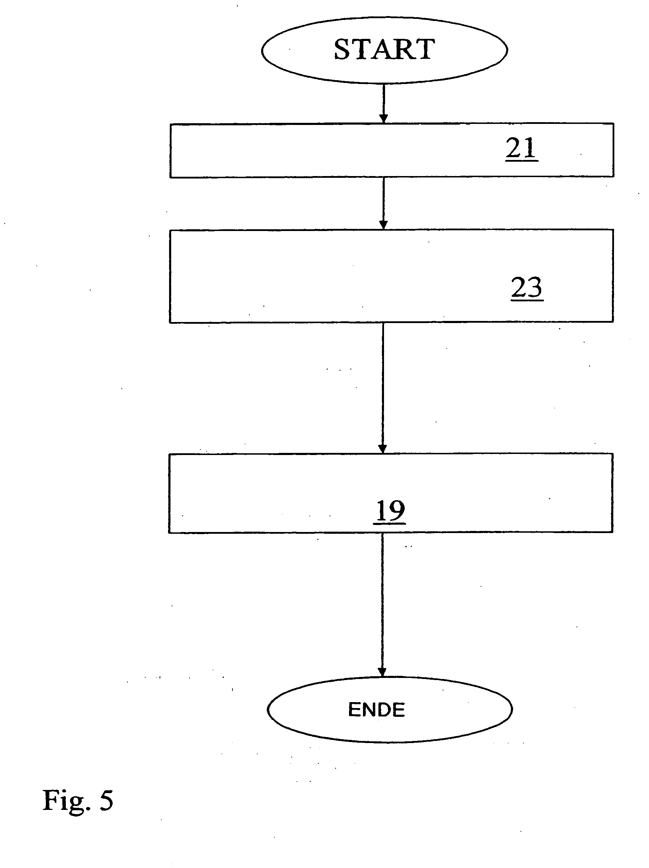

Die Figur 5 veranschaulicht ein anderes Beispiel eines Datenkommunikationsvorgangs zwischen einem externen Nutzer einer DER, also zum Beispiel einem Windenergieanlageninteressenhalter, und der SCADA-Einheit 2 gemäß der Erfindung. Der Verbindungsaufbau zwischen einem externen Nutzer und der SCADA-Einheit 2 vermittels des lokalen Kernels 9 verläuft analog zu dem in Figur 4 beschriebenen Verfahren über einen öffentlichen Verbindungsdienst 21, welcher eine Sitzung 22 eröffnet, woraufhin ein Zugangsberechtigungsdienst 23 die Zugangsberechtigung zu dem lokalen Kernel 9 überprüft.

Abweichend von dem in Figur 4 beschriebenen Verfahren wird in Fig. 5 hingegen nach Herstellung des Kommunikationszyklus 24 der in den öffentlich zugänglichen Datenbereich 16 des dezentralen Kernels 9 implementierte Datenauswertedienst 19 aktiviert. Der Abmeldevorgang verläuft analog zu der in Figur 4 beschriebenen Situation und ist in Figur 5 nicht weiter veranschaulicht.

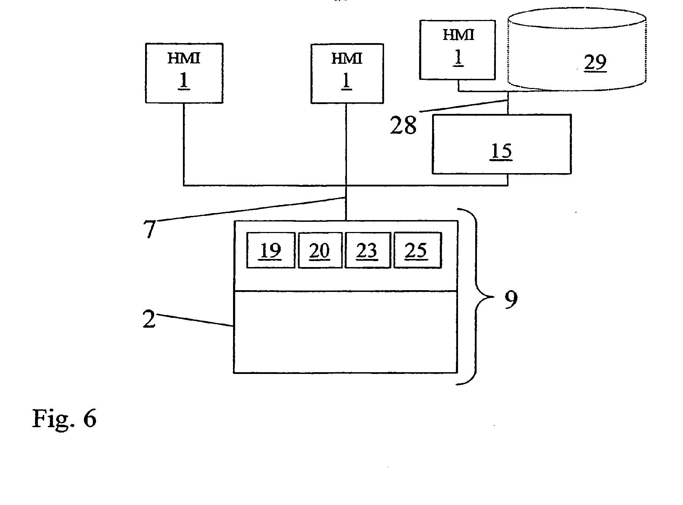

Schließlich ist in Figur 6 eine weitere bevorzugte Anwendungsmöglichkeit der erfindungsgemäßen SCADA-Einheit 2 skizziert. Wie zu erkennen, sind externe Mensch-Maschine-Schnittstellen 1 über das Internet 7 direkt mit der erfindungsgemäßen SCADA-Einheit 2 verbunden und rufen auf die weiter oben näher beschriebene Weise den Datenauswertedienst 19, den Echtzeitdatenübertragungsdienst 20, den Zugangsberechtigungsdienst 23 und/oder den Steuerungsdienst 25 der DER auf. Weiterhin ist zu erkennen, dass ein Alarmmeldedienst 15 ebenfalls über das Internet 7 mit den genannten Diensten 19, 20, 23, 25, welche innerhalb des dezentralen Kernels 9 implementiert sind, kommuniziert. Über ein Alarmverteilernetz 28 kommuniziert der Alarmmeldedienst 15 mit einer Mensch-Maschine-Schnittstelle 1 und mit einer interessenhalterseitigen Datenbank 29.

Auf diese Weise ist gemäß der Erfindung eine eine lokale Steuer- und Datenaufzeichnungseinheit (SCADA-Einheit) zum Einbau in dezentrale Energieressourcen (DER), insbesondere Windturbineneinheit, und/oder zur dezentralen Verwendung am Ort einer dezentrale Energieressource (DER), insbesondere Windturbineneinheit, umfassend eine Steuereinheit, insbesondere Turbinensteuereinheit, zur Steuerung der dezentralen Energieressourcen (DER), eine Datenbank zum Speichern von Betriebsdaten und/oder Betriebsparametern sowie eine Netzwerk-Kommunikationsschnittstelle zum Austausch von Daten und/oder Steuerbefehlen mit externen Einheiten über ein externes Netzwerk., der gattungsgemäßen Art vorgeschlagen, mit welcher aufgrund der Vermittlung des lokalen Kernels 9 eine direkte Datenkommunikation möglich ist, ohne dass der SCADA-Einheit für diese Kommunikation ein zentraler SCADA-Master vorgeschaltet sein müsste. Hierdurch werden zum einen die Anschaffungs- und Betriebskosten des SCADA-Masters eingespart, zum anderen ergibt sich eine flexiblere Anwendbarkeit bedingt durch die Verwendbarkeit standardisierter Kommunikationsprotokolle und standardisierter Kommunikationshardware.

### BEZUGSZEICHENLISTE

- 1: externe Mensch-Maschine-Schnittstelle
- 2: SCADA-Einheit, in die Windturbineneinheit integriert
- 3: Windturbinensteuerung (SCADA slave)
- 4: speicherprogrammierbare Steuereinheit
- 5: lokales Netzwerk
- 6: SCADA Masterstation
- 7: Internet
- 8: direkte Datenverbindung
- 9: lokales Kernel
- 10: Datenbank
- 11: Turbinensteuereinheit
- 12: interne Mensch-Maschine-Schnittstelle
- 13: Netzwerkschnittstelle
- 14: Datenendgerät
- 15: Alarmmeldedienst
- 16: öffentlich zugänglicher Datenbereich
- 17: geschützter Datenbereich
- 18: service repository
- 19: Datenauswertedienst
- 20: Echtzeitdatenübertragungsdienst
- 21: öffentlicher Verbindungsdienst
- 22: Sitzung
- 23: Zugangsberechtigungsdienst
- 24: Kommunikationszyklus
- 25: Turbinensteuerungsdienst
- 26: Nutzer-Abmeldedienst
- 27: Abmeldeschritt
- 28: Alarmverteilernetz
- 29: Datenbank (interessenhalterseitig)

## Patentansprüche

1. Dezentrale Steuer- und Datenaufzeichnungseinheit (2) (SCADA-Einheit) zum Einbau in dezentrale Energieressourcen (DER), insbesondere Windturbineneinheit, und/oder zur dezentralen Verwendung am Ort einer dezentrale Energieressource (DER), insbesondere Windturbineneinheit, umfassend eine Steuereinheit, insbesondere Turbinensteuereinheit (11), zur Steuerung der dezentralen Energieressourcen (DER), eine Datenbank (10) zum Speichern von Betriebsdaten und/oder Betriebsparametern sowie eine Netzwerk-Kommunikationsschnittstelle (13) zum Austausch von Daten und/oder Steuerbefehlen mit externen Einheiten (1, 14, 15, 29) über ein externes Netzwerk (7), **dadurch gekennzeichnet, daß** sie einen SCADA-Betriebssystemkern (9) (kernel) zum Steuern und/oder Verwalten der Steuereinheit (11), der Datenbank (10) und der Kommunikationseinheit (13) aufweist.

2. SCADA-Einheit (2) nach Anspruch 1, **dadurch gekennzeichnet, daß** der Betriebssystemkern (9) einen über die Netzwerk-Kommunikationsschnittstelle (13) öffentlich zugänglichen Datenbereich (16) aufweist.

3. SCADA-Einheit (2) nach Anspruch 1 oder 2, **dadurch gekennzeichnet, daß** der Betriebssystemkern (9) einen geschützten Datenbereich (17), welcher nicht über die Netzwerk-Kommunikationsschnittstelle (13) öffentlich zugänglich ist, aufweist.

4. SCADA-Einheit (2) nach einem der vorhergehenden Ansprüche, **dadurch gekennzeichnet, daß** dieDatenbank(10)in dem geschützten Datenbereich (17) implementiert ist.

5. SCADA-Einheit (2) nach einem der vorhergehenden Ansprüche, **dadurch gekennzeichnet, daß** dieDatenbank(10)zum langfristigen Speichern, insbesondere zur Auswertung von Langzeittrenddaten, ausgebildet ist.

6. SCADA-Einheit (2) nach einem der vorhergehenden Ansprüche, **dadurch gekennzeichnet, daß** in dem geschützten Datenbereich (17) eine lokale Kommunikationseinheit (21) zur Kommunikation zwischen dem Betriebssystemkern (9) und der dezentralen Energieressource (DER) implementiert ist.

7. SCADA-Einheit (2) nach einem der vorhergehenden Ansprüche, **dadurch gekennzeichnet, daß** der öffentlich zugängliche Datenbereich (16) zur Ausführung eines oder mehrerer softwarebasierter Dienste (19, 20, 23, 25) ausgebildet ist.

8. SCADA-Einheit (2) nach einem der vorhergehenden Ansprüche, **dadurch gekennzeichnet, daß** dersoftwarebasierte Dienst (20) die Übertragung von Echtzeitdaten der dezentrale Energieressourcen (DER) beinhaltet.

9. SCADA-Einheit (2) nach einem der vorhergehenden Ansprüche, **dadurch gekennzeichnet, daß** dersoftwarebasierte Dienst (19) die Übertragung von die dezentrale Energieressource (DER) betreffenden Datenauswertungen, insbesondere Produktionsdaten, Leistungsdaten, Zeitreihen, Fehlerverfolgungen, beinhaltet.

10. SCADA-Einheit (2) nach einem der vorhergehenden Ansprüche, **dadurch gekennzeichnet, daß** der Betriebssystemkern (9) ein Verzeichnis und/oder einen Mechanismus (service repository) (18) zum Auffinden von softwarebasierten Diensten (19, 20, 23, 25) aufweist.

11. SCADA-Einheit (2) nach einem der vorhergehenden Ansprüche, **dadurch gekennzeichnet, daß** sie eine Mensch-Maschine-Schnittstelle (HMI) (12), insbesondere visuelle, aufweist.

12. SCDA-Einheit (2) nach einem der vorhergehenden Ansprüche, **dadurch gekennzeichnet, daß** die Netzwerk-Kommunikationsschnittstelle (13) zur Kommunikation mit dem externen Netzwerk mittels des TCP/IP Kommunikationsprotokolls ausgebildet ist.

13. SCADA-Einheit (2) nach einem der vorhergehenden Ansprüche, **dadurch gekennzeichnet, daß** diesoftwarebasierten Dienste (19, 20, 23, 25) über das SOAP Kommunikationsprotokoll abrufbar sind.

14. SCADA-Einheit (2) nach einem der vorhergehenden Ansprüche, **dadurch gekennzeichnet, daß** dasVerzeichnisund/oder der Mechanismus (service repository) (18) zur Kommunikation über mindestens eines der Protokolle WSDL, UDDI, WSInspection ausgebildet ist.

## Claims

1. Decentralised control and data recording unit (2) (SCADA unit) for installation in decentralised energy resources (DER), in particular wind turbine units, and/or for decentralised use at the site of a decentralised energy resource (DER), in particular a wind turbine unit, comprising a control unit, in particular a turbine control unit (11), for controlling the decentralised energy resources (DER), a database (10) for storing operating data and/or operating parameters, and also a network communication interface (13) for exchanging data and/or control commands with external units (1, 14, 15, 29) via an external network (7), **characterised in that** it has a SCADA operating system central component (9) (kernel) for controlling and/or managing the control unit (11), the database (10), and the communication unit (13).

2. SCADA unit (2) according to claim 1, **characterised in that** the operating system kernel (9) has a data region (16) which is publicly accessible via the network communication interface (13).

3. SCADA unit (2) according to either claim 1 or claim 2, **characterised in that** the operating system kernel (9) has a protected data region (17) which is not publicly accessible via the network communication interface (13).

4. SCADA unit (2) according to any one of the preceding claims, **characterised in that** the database (10) is implemented in the protected data region (17).

5. SCADA unit (2) according to any one of the preceding claims, **characterised in that** the database (10) is constructed for long-term storage, in particular the evaluation of long-term trend data.

6. SCADA unit (2) according to any one of the preceding claims, **characterised in that** a local communication unit (21) for communication between the operating system kernel (9) and the decentralised energy resource (DER) is implemented in the protected data region (17).

7. SCADA unit (2) according to any one of the preceding claims, **characterised in that** the publicly accessible data region (16) is constructed for the execution of one or more software-based services (19, 20, 23, 25).

8. SCADA unit (2) according to any one of the preceding claims, **characterised in that** the software-based service (20) includes the transmission of real-time data of the decentralised energy resources (DER).

9. SCADA unit (2) according to any one of the preceding claims, **characterised in that** the software-based service (19) includes the transmission of data evaluations relating to the decentralised energy resource (DER), in particular production data, output data, time series, error tracking.

10. SCADA unit (2) according to any one of the preceding claims, **characterised in that** the operating system kernel (9) has a directory and/or a mechanism (service repository) (18) for locating software-based services (19, 20, 23, 25).

11. SCADA unit (2) according to any one of the preceding claims, **characterised in that** it has a human-machine interface (HMI) (12), in particular a visual interface.

12. SCADA unit (2) according to any one of the preceding claims, **characterised in that** the network communication interface (13) is constructed for communication with the external network by means of the TCP/IP communication protocol.

13. SCADA unit (2) according to any one of the preceding claims, **characterised in that** the software-based services (19, 20, 23, 25) can be called via the SOAP communication protocol.

14. SCADA unit (2) according to any one of the preceding claims, **characterised in that** the directory and/or the mechanism (service repository) (18) is constructed for communication via at least one of the protocols WSDL, UDDI, WSInspection.

## Revendications

1. Unité de commande et d'enregistrement de données décentralisée (2) (unité SCADA) destinée à être incorporée dans des ressources d'énergie décentralisées (DER), en particulier unité de turbine éolienne, et/ou à être utilisée de manière décentralisée à l'endroit d'une ressource d'énergie décentralisée (DER), en particulier unité de turbine éolienne, comprenant une unité de commande, en particulier une unité de commande de turbine (11), destinée à commander les ressources d'énergie décentralisées (DER), une banque de données (10) destinée à mémoriser les données de fonctionnement et/ou les paramètres de fonctionnement, ainsi qu'une interface de communication de réseau (13) destinée à échanger des données et/ou des ordres de commande avec des unités externes (1, 14, 15, 29) via un réseau externe (7), **caractérisée par le fait qu'**elle présente un noyau de système de fonctionnement SCADA (9) (noyau) destiné à commander et/ou à gérer l'unité de commande (11), la banque de données (10) et l'unité de communication (13).

2. Unité SCADA (2) selon la revendication 1, **caractérisée par le fait que** le noyau de système de fonctionnement (9) présente une zone de données (16) accessible publiquement via l'interface de communication de réseau (13).

3. Unité SCADA (2) selon la revendication 1 ou 2, **caractérisée par le fait que** le noyau de système de fonctionnement (9) présente une zone de données protégée (17) qui n'est pas accessible publiquement via l'interface de communication de réseau (13).

4. Unité SCADA (2) selon l'une des revendications précédentes, **caractérisée par le fait que** la banque de données (10) est mise en oeuvre dans la zone de données protégée (17).

5. Unité SCADA (2) selon l'une des revendications précédentes, **caractérisée par le fait que** la banque de données (10) est réalisée en vue de la mémorisation à long terme, en particulier de l'évaluation de données de tendance à long terme.

6. Unité SCADA (2) selon l'une des revendications précédentes, **caractérisée par le fait que** dans la zone de données protégée (17) est mise en oeuvre une unité de communication locale (21) destinée à la communication entre le noyau de système de fonctionnement (9) et la ressource d'énergie décentralisée (DER).

7. Unité SCADA (2) selon l'une des revendications précédentes, **caractérisée par le fait que** la zone de données accessible publiquement (16) est réalisée en vue de l'exécution d'un ou plusieurs services à base de logiciel (19, 20, 23, 25).

8. Unité SCADA (2) selon l'une des revendications précédentes, **caractérisée par le fait que** le service à base de logiciel (20) contient la transmission de données en temps réel des ressources d'énergie décentralisées (DER).

9. Unité SCADA (2) selon l'une des revendications précédentes, **caractérisée par le fait que** le service à base de logiciel (19) contient la transmission d'évaluations de données concernant la ressource d'énergie décentralisée (DER), en particulier de données de production, de données de puissance, de séries temporelles, de poursuites d'erreur.

10. Unité SCADA (2) selon l'une des revendications précédentes, **caractérisée par le fait que** le noyau de système de fonctionnement (9) présente un répertoire et/ou un mécanisme (service repository) (18) pour rechercher des services à base de logiciel (19, 20, 23, 25).

11. Unité SCADA (2) selon l'une des revendications précédentes, **caractérisée par le fait qu'**elle présente une interface homme-machine (HMI) (12), en particulier visuelle.

12. Unité SCDA (2) selon l'une des revendications précédentes, **caractérisée par le fait que** l'interface de communication de réseau (13) est réalisée en vue de la communication avec le réseau externe au moyen du protocole de communication TCP/IP.

13. Unité SCADA (2) selon l'une des revendications précédentes, **caractérisée par le fait que** les services à base de logiciel (19, 20, 23, 25) peuvent être sollicités via le protocole de communication SOAP.

14. Unité SCADA (2) selon l'une des revendications précédentes, **caractérisée par le fait que** le répertoire et/ou le mécanisme (service repository) (18) est réalisé en vue de la communication via au moins l'un des protocoles WSDL, UDDI, WSInspection.
